(19) Europäisches Patentamt
European Patent Office
Office européen des brevets

(11) EP 3 057 891 B1

(12) EUROPÄISCHE PATENTSCHRIFT

(45) Veröffentlichungstag und Bekanntmachung des Hinweises auf die Patenterteilung:
22.11.2017 Patentblatt 2017/47

(51) Int Cl.:
B65G 47/82 (2006.01)     B65G 47/84 (2006.01)

(21) Anmeldenummer: 14781478.4

(22) Anmeldetag: 23.09.2014

(86) Internationale Anmeldenummer:
PCT/EP2014/070170

(87) Internationale Veröffentlichungsnummer:
WO 2015/055386 (23.04.2015 Gazette 2015/16)

(54) **AUSLEITVORRICHTUNG ZUM AUSLEITEN VON BEHÄLTERN**

DIVERTING DEVICE FOR DIVERTING CONTAINERS

DISPOSITIF D'ÉCARTEMENT POUR ÉCARTER DES RÉCIPIENTS

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 14.10.2013 DE 102013220682

(43) Veröffentlichungstag der Anmeldung:
24.08.2016 Patentblatt 2016/34

(73) Patentinhaber: KRONES Aktiengesellschaft
93073 Neutraubling (DE)

(72) Erfinder: WINKLER, Günter
93073 Neutraubling (DE)

(74) Vertreter: Grünecker Patent- und Rechtsanwälte PartG mbB
Leopoldstraße 4
80802 München (DE)

(56) Entgegenhaltungen:
EP-A1- 2 594 513     WO-A1-03/022717
DE-A1- 2 129 914     DE-A1-102010 062 830
US-A- 3 791 518     US-A- 4 321 994

EP 3 057 891 B1

## Beschreibung

Die vorliegende Erfindung betrifft eine Ausleitvorrichtung sowie ein Verfahren zum Ausleiten von Behältern, die mehrere Ausleitsegmente umfassen.

## Stand der Technik

Ausleitvorrichtungen zum Ausleiten von Behältern, wie beispielsweise Flaschen, aus Transportstrecken sind aus dem Stand der Technik prinzipiell bekannt. So offenbart die EP 1 012 087 B1 einen neben einer Transportstrecke angeordneten verfahrbaren Schlitten. Dieser wird mit derselben Geschwindigkeit wie auszuleitende Behälter bewegt und umfasst ferner mehrere Ausleitsegmente, die quer zur Transportrichtung der Behälter ausgefahren werden und den Behälter ausleiten können.

Ferner offenbart die DE 10 2010 025 744 A1 neben dem Förderband angeordnete Aktuatoren, die gemeinsam eine Förderkurve bilden, die einen Behälter sukzessive aus der Standardtransportstrecke auf beispielsweise eine Ausleitbahn transportieren kann. Dazu wird durch die einzelnen Kontaktflächen der Aktuatoren eine gekrümmte Ausleitkurve gebildet, die die Bewegung eines ankommenden Behälters derart beeinflussen kann, dass er auf die Ausleitbahn umgelenkt wird. Es treten hier jedoch erhebliche Bremswirkungen aufgrund der sich vor und neben dem Behälter aufbauenden Kurve durch die stillstehenden Ausleitsegmente auf, wodurch die Behälter umkippen können, insbesondere durch ein Wiederbeschleunigen der Behälter nach dem Kontakt mit den Ausleitsegmenten.

Das Dokument WO 03/0227717 A1 offenbart eine Vorrichtung und ein Verfahren nach den Oberbegriffe der Ansprüche 1, 7.

## Aufgabe

Ausgehend vom Stand der Technik besteht eine Aufgabe der Erfindung darin, eine Ausleitvorrichtung zum Ausleiten von Behältern bereitzustellen, wobei die erreichbaren Transportgeschwindigkeiten der Behälter, bei denen noch zuverlässig ausgeleitet werden kann, deutlich höher sein sollen als bei bekannten Ausleitvorrichtungen.

## Lösung

Diese Aufgabe wird erfindungsgemäß durch die Ausleitvorrichtung nach Anspruch 1 und das Verfahren zum Ausleiten von Behältern nach Anspruch 7 gelöst. Vorteilhafte Weiterbildungen der Erfindung sind in den Unteransprüchen erfasst.

Die erfindungsgemäße Ausleitvorrichtung zum Ausleiten von Behältern, wie Flaschen, aus einer Transportstrecke ist dadurch gekennzeichnet, dass die Ausleitsegmente eine Ausleitfläche umfassen, die parallel zur Transportrichtung der Behälter verläuft und die mit einem auszuleitenden Behälter in Kontakt treten kann. Die so bereitgestellte Ausleitvorrichtung gestattet ein Ausleiten von Behältern aus der Transportstrecke mit erheblich höherer Geschwindigkeit, da kein bzw. nur ein vernachlässigbares Abbremsen der Behälter in Transportrichtung während des Ausleitvorgangs erfolgt und daher die Wahrscheinlichkeit von umkippenden Behältern reduziert wird.

Je mehr Ausleitsegmente verwendet werden, desto kleiner kann diese Einteilung sein.Der Vorteil liegt hier darin, dass ein Behälter nicht nur mittels eines Ausleitsegments ausgeleitet wird sondern mit Hilfe mehrerer Ausleitsegmente, wodurch die Ausleitbewegung quer zur Transportstrecke über einen längeren Zeitraum erfolgt, was die Gefahr eines Umkippens aufgrund zu großer einwirkender Beschleunigungen reduziert.

In einer Ausführungsform ist jedes Ausleitsegment separat ansteuerbar. So kann jeder Ausleitvorgang und die Bewegung jedes Ausleitsegments angesteuert werden, wodurch die möglichen Ausleitvorgänge deutlich flexibler werden, verglichen mit dem Stand der Technik. Die Ausleitvorrichtung kann so für ein und denselben Behältertyp verschiedene Ausleitvorgänge vorsehen, bei denen Behälter beispielsweise verschieden schnell oder weit bewegt werden und die Ausleitvorrichtung kann so auch für verschiedene Behältertypen angepasst werden.

Ferner kann vorgesehen sein, dass eine Ausleitstrecke eines Behälters senkrecht zur Transportstrecke durch Steuerung des Bewegungsprofils jedes Ausleitsegments eingestellt werden kann. So kann durch eine entsprechende Ansteuerung der Ausleitsegmente sowohl die Geschwindigkeit, mit der ein Behälter ausgeleitet wird, als auch die gesamte Ausleitstrecke, beispielsweise ob der Behälter auf die nächste oder die übernächste Transportbahn ausgeleitet wird, gesteuert werden.

In einer Weiterbildung der Erfindung umfasst die Ausleitvorrichtung wenigstens 15, 20, 25 oder 30 Ausleitsegmente. Die Verwendung einer Vielzahl von Ausleitsegmenten erlaubt eine wesentlich feinere sukzessive Einteilung der Ausleitvorgänge, die mit jedem einzelnen Ausleitsegment erreicht werden und erlaubt beispielsweise bei Vorsehen nur einer einzigen Ausleitvorrichtung dennoch das Ausleiten mehrerer Behälter gleichzeitig.

Durch die mehreren Ausleitsegmente können auch Behälter aus einem Strom von Behältern, die direkt hintereinander oder dicht beabstandet transportiert werden, einzeln unabhängig von den vor- oder nachlaufenden Behältern ausgeleitet werden, wenn sichergestellt wird, dass die Segmente bei nicht auszuleitenden Flaschen immer eingefahren sind und nur im (mitwandernden) Bereich der auszuleitenden Flaschen ausgefahren sind und/oder werden. Durch die parallele Ausrichtung der Ausleitflächen können die Behälter wie von einem einzelnen Schieber, der senkrecht zur Transportrichtung bewegt wird, ausgeleitet werden, die Strecke, die ein Behälter während des Ausleitvorgangs in Transportrichtung zurücklegt, jedoch größer sein, als die Behälterteilung in Transportrichtung (gegeben durch Behälterausdehnung in Transportrichtung und eventuelle Beabstandung der Behälter in Transportrichtung).

Gemäß einer Ausführungsform ist die Ausleitvorrichtung dadurch gekennzeichnet, dass die Ausleitfläche einen geringeren Reibungskoeffizienten aufweist als die Transportstrecke. Dadurch können selbst Behälter, die mit sehr hohen Transportgeschwindigkeiten (bis zu 4 m/s) transportiert werden, ohne die Gefahr des Umkippens ausgeleitet werden, da durch den geringen Reibungskoeffizienten die Behälter in ihrer Bewegung entlang der Transportstrecke kaum behindert werden und nur eine Krafteinwirkung senkrecht zur Transportstrecke durch die Bewegung der Ausleitsegmente selbst in diese Richtung erfahren.

In einer Ausführungsform ist die Ausleitvorrichtung dadurch gekennzeichnet, dass eine erste Anzahl von Ausleitsegmenten in Transportrichtung vor einer zweiten Anzahl von Ausleitsegmenten angeordnet ist und die erste Anzahl zumindest das in Transportrichtung erste (beim Ausleitvorgang benutzte) Ausleitsegment umfasst und die zweite Anzahl zumindest das in Transportrichtung letzte (beim Ausleitvorgang benutzte) Ausleitsegment umfasst, wobei die erste Anzahl von Ausleitsegmenten einen Behälter jeweils um eine Strecke kleiner a ausleiten kann und die zweite Anzahl von Ausleitsegmenten einen Behälter jeweils um eine Strecke größer a ausleiten kann, wobei $a = \dfrac{A}{N}$ ist, mit A als Gesamtlänge der Ausleitstrecke und N Anzahl der Ausleitsegmente. So kann ein Behälter anfangs allmählich aus seiner ursprünglichen Bewegungsbahn ausgeleitet werden und dann immer stärker ausgeleitet werden.

Die Ausleitflächen müssen in einer Richtung senkrecht zur Oberfläche der Transportstrecke gerade oder gekrümmt sein. Wenn die Ausleitflächen gerade sind, sind die Ausleitflächen parallel zur Transportrichtung und parallel zur Richtung senkrecht zur Oberfläche der Transportstrecke.

Wenn Sie gekrümmt sind, können sie beispielsweise die Form eines Geländers oder eines horizontalen Schubprofils haben, von denen dann aber vorzugsweise mehrere vorgesehen sind, um gleichzeitig an verschiedenen Höhen eines Behälters zum Ausleiten anzugreifen.

Unter Verwendung beispielsweise einer dieser Vorrichtungen kann ein Verfahren zum Ausleiten von Behältern, wie Flaschen, aus einer Transportstrecke nach Anspruch 7. verwirklicht werden. Mit diesem Verfahren kann ein Ausleitvorgang realisiert werden, der auch auf Behälter anwendbar ist, die mit deutlich höherer Geschwindigkeit als bisher entlang der Transportstrecke transportiert werden und flexibel mit Bezug auf die Bahn, auf die ein Behälter ausgeleitet wird, eingesetzt werden kann.

Diese sukzessive Ausleitung mittels mehrerer Ausleitsegmente ist umso feiner (bei Beibehalten einer Einteilung der Ausleitstrecke A in gleichgroße Teile $\bar{a}$), je mehr Ausleitsegmente $\bar{N} > N$ verwendet werden und reduziert grundsätzlich die von den Ausleitsegmenten auf den Behälter übertragenen Kräfte/Beschleunigungen. In einer Ausführungsform wird die Bewegung der Ausleitsegmente separat gesteuert. Durch die separate Steuerung jedes Ausleitsegments kann zum Einen der Ausleitprozess individuell gesteuert werden und zum Anderen kann auch Rücksicht auf veränderte Bedingungen während des Ausleitprozesses, z.B. ein Taumeln des Behälters genommen werden, wodurch der gesamte Prozess hinsichtlich seiner Zuverlässigkeit optimiert werden kann. Weiter können durch die individuelle Steuerung Behälter, die dem auszuleitenden Behälter vor- oder nachlaufen, (ebenfalls individuell) nicht ausgeleitet werden oder (ebenfalls individuell) ausgeleitet werden.

Nach einer weiteren Ausführungsform ist das Verfahren dadurch gekennzeichnet, dass eine Ausleitstrecke eines auszuleitenden Behälters senkrecht zur Transportstrecke durch Steuerung des Bewegungsprofils der Ausleitsegmente bestimmt wird. So kann nicht nur die Entfernung, um die ein Behälter ausgeleitet werden soll gesteuert werden, sondern auch die Geschwindigkeit, mit der dies passiert bzw. der Impulsübertragung oder der Kraftübertragung während des Ausleitvorgangs.

Gemäß einer Ausführungsform wird die Bewegung der Ausleitsegmente senkrecht zur Transportstrecke durch eine Funktion $x = l \cdot \sin(ct)$ oder eine beliebige andere Funktion $x_{a,b,\ldots}(t)$ beschrieben, wobei t die Zeit und a, b, c beliebige reelle Zahlen größer Null sind. Eine Bewegung gemäß einer Sinus-Funktion ist vom steuerelektronischen Gesichtspunkt einfach umzusetzen und zeichnet sich dadurch aus, dass in dem Punkt, in dem der Behälter berührt wird, die Geschwindigkeit des Ausleitsegments möglichst gering ist, weshalb der Behälter während der Verschiebung quer zur Transportstrecke nur einen geringen Kraftübertrag erfährt und daher die Gefahr eines Umkippens reduziert wird. Die Anpassung des Bewegungsprofils der Ausleitsegmente an beliebige Funktionen kann jedoch vorteilhaft mit Hinblick auf ein bestimmtes zu erreichendes Bewegungsprofil der auszuleitenden Behälter sein.

In einer Ausführungsform ist die Geschwindigkeit, mit der das Ausleitsegment in Richtung des auszuleitenden Behälters bewegt wird und von diesem entfernt wird, größer ist als die Geschwindigkeit, mit der sich das Ausleitsegment bewegt während das Ausleitsegment mit der Ausleitfläche in Kontakt mit dem auszuleitenden Behälter steht. Analog zu der beschriebenen Sinuskurve reduzieren entsprechende Geschwindigkeitsprofile der Ausleitsegmente das Risiko eines Umkippens des Behälters aufgrund eines zu großen Impulsübertrags erheblich, was den gesamten Ausleitvorgang zuverlässiger macht.

## Kurze Beschreibung der Figuren

Fig. 1  Schematische Darstellung einer erfindungsgemäßen Ausleitvorrichtung gemäß einer Ausführungsform;

Fig. 2a-c  Schematische Darstellung eines Ausleitvorgangs gemäß einer Ausführungsform;

Fig. 3a+b  Darstellung unterschiedlicher Bewegungsprofile der Ausleitsegmente;

Fig. 4  Darstellung einer Bewegungstrajektorie eines Behälters.

## Ausführliche Beschreibung

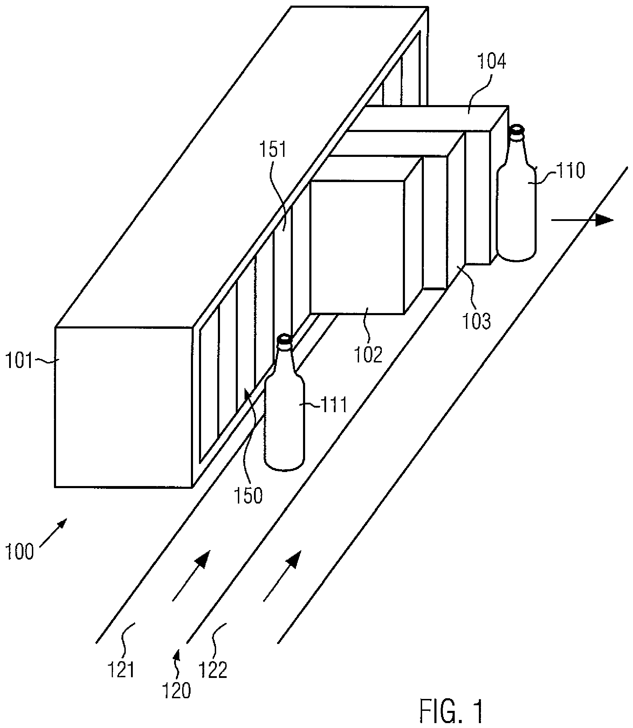

Fig. 1 zeigt eine erfindungsgemäße Ausleitvorrichtung 100, die direkt benachbart einer Transportstrecke 120 angeordnet ist. Die Transportstrecke ist hier ein Linearförderer, wobei dieser in zwei unterschiedliche Förderer 121 und 122 unterteilt ist. Die Ausleitvorrichtung 100 ist jedoch nicht auf Anwendungen bei solchen Transportstrecken begrenzt. Vielmehr kann die Ausleitvorrichtung 100 auch auf wesentlich umfangreichere Transportstrecken mit einer Vielzahl (mehr als zwei, fünf oder zehn) von einzelnen Transportbahnen 121 und 122 usf. angewendet werden oder auch nur ein Transportband, auf dem in Transportrichtung nebeneinander mehrere Behälter Platz haben, vorgesehen sein. Bei letzterem sind mehrere Transportstrecken nebeneinander auf einem Förderband vorgesehen.

Die Ausleitvorrichtung 100 umfasst in dieser Ausführungsform einen Rahmen 101. Erfindungsgemäß sind in diesem Rahmen die Ausleitsegmente 150 enthalten. Die Anzahl der Ausleitsegmente ist prinzipiell beliebig, beträgt jedoch wenigstens zwei. Darüber hinaus können beliebige Anzahlen von Ausleitsegmenten vorgesehen sein. Da jedoch die gesamte Anordnung nicht beliebig viel Platz beanspruchen sollte, gleichzeitig aber das Ausleiten der Behälter möglichst zuverlässig erfolgen sollte, sind 12 bis 20, bevorzugt 16 Ausleitsegmente vorgesehen. Abhängig davon, wie weit Behälter ausgeleitet werden sollen, genügen auch weniger Ausleitsegmente, beispielsweise 5 oder 10. Dies gilt natürlich nur, wenn die Ausleitsegmente einen Behälter immer um die Strecke Δ relativ zum vorherigen Ausleitsegment ausleiten. Prinzipiell ist jedoch die Strecke, um die ein einzelnes Ausleitsegment einen Behälter ausleitet, beliebig, sodass auch mit weniger Ausleitsegmenten eine gewünschte Ausleitstrecke A realisiert werden kann. Allerdings bietet die Verwendung vieler Ausleitsegmente den Vorteil, dass Kollisionen von in der Transportstrecke transportierten Behältern mit noch ausgefahrenen Ausleitsegmenten, die einen anderen Behälter ausgeleitet haben, aber noch nicht in ihre Ausgangsposition zurückgefahren wurden, vermieden werden können.

Die prinzipielle Funktionsweise der Ausleitvorrichtung 100 besteht darin, dass die Ausleitvorrichtung 100 ortsfest neben der Transportstrecke angeordnet ist und die Ausleitsegmente eine glatte Oberfläche derart aufweisen, dass jedes Ausleitsegment, das beispielsweise durch einen positionsgeregelten Motor angetrieben wird, für sich eine in Transportrichtung nicht gekrümmte Ausleitfläche 151 aufweist. Die Ausleitsegmenten 102-104 werden in Fig. 1 zum Ausleiten eines Behälters benutzt. Dazu können die Ausleitsegmente aus dem Rahmen 101 der Ausleitvorrichtung 100 in Richtung der Transportstrecke aber senkrecht zur Bewegungsrichtung der beförderten Behälter 110 und 111 gefahren werden. Dabei kommen sie, sofern sie hinreichend weit ausgefahren werden, in Berührung mit der Außenwand eines Behälters 110. Aufgrund der ebenen Ausleitfläche 151, die parallel zur Transportrichtung der Behälter angeordnet ist, wird ein Kraftübertrag auf den Behälter 110 derart ermöglicht, dass er eine Kraft im Wesentlichen senkrecht zur Transportrichtung erfährt. So kann der Behälter 110 von der ersten Transportstrecke 121 auf die zweite Transportstrecke 122 ausgeleitet werden. Durch die Ausleitfläche 151 jedes Ausleitsegments und deren Anordnung parallel zur Transportrichtung der Behälter kann erreicht werden, dass die insgesamt von einem Ausleitsegment 103 und 104 auf den Behälter 110 übertragene Kraft nur eine kleine Komponente in Transportrichtung oder entgegengesetzt zur Transportrichtung aufweist, verglichen mit der Kraftkomponente, die senkrecht zur Transportrichtung wirkt und den Behälter auf die zweite Transportbahn 122 schiebt. Die Ausleitfläche ist in der in Fig. 1 dargestellten Ausführungsform eben und einstückig. Die Ausleitsegmente können aber auch andere Ausleitflächen umfassen, die beispielsweise gekrümmt sind, um sich einer Außenkontur eines Behälters anzupassen. Sie können auch mehrstückig ausgebildet sein. In jedem Fall ist vorgesehen, dass zumindest der mit dem Behälter direkt in physischen Kontakt tretende Teil der Ausleitfläche 151 parallel bzw. nahezu parallel (ggf. einen kleinen Winkel mit der Transportstrecke einschließend) zur Transportrichtung der Behälter angeordnet ist. Ist vorgesehen, dass die Ausleitfläche 151 komplett eben ausgebildet ist, kann vorgesehen sein, dass die Ausleitfläche nicht nur parallel zur Transportrichtung der Behälter ist, sondern parallel zur durch die Transportrichtung einerseits und die zur Transportstrecke senkrechte Richtung andererseits aufgespannte Ebene verläuft. Beispielhaft kann auch vorgesehen sein, dass die Ausleitfläche des Ausleitsegments einen kleinen Winkel <20° mit der Transportrichtung der Behälter einschließt. Dabei ist dann vorgesehen, dass die Ausleitfläche in Transportrichtung von der Transportrichtung wegweisend angeordnet ist. Dadurch kann erreicht werden, dass die durch die Reibung des Behälters an der Ausleitfläche bedingte und entgegen der Transportrichtung der Behälter wirkende Reibungskraft teilweise kompensiert wird, da der Behälter durch die Schrägstellung der Ausleitfläche eine Kraft in Transportrichtung (der Behälter wird gewissermaßen "angeschoben") erfährt. So können unerwünschte Veränderungen im Bewegungsprofil des Behälters, insbesondere unerwünschte Verzögerungen, die zum Umkippen des Behälters oder zu Zusammenstößen mit anderen Behältern führen können, vermieden werden.

Angetrieben werden die Ausleitsegmente von dafür vorgesehenen Motoren. Da es in diesem Zusammenhang wichtig sein kann, dass jedes Ausleitsegment mit hoher Präzision verfahren werden kann, sind Elektromotoren und hier insbesondere Stellantriebe oder Aktuatoren bevorzugt, da sie eine genaue Einstellung der Bewegung der Ausleitsegmente 150 ermöglichen. Der entsprechende Motor kann entweder im Rahmen 101 oder separat vorgesehen sein. Bevorzugt ist, wenn die Ausleitsegmente 150 alle von eigenständigen, den Ausleitsegmenten zugeordneten Motoren angetrieben werden. Eine entsprechend vorgesehene Steuereinheit, die die Motoren ansteuern und damit die Bewegung der Ausleitsegmente steuern kann, ist dann so ausgebildet, dass sie jeden der Motoren separat ansteuern kann. Dazu sind entsprechende, vorzugsweise bidirektionale Datenverbindungen zwischen den Motoren und der Steuereinheit vorgesehen.

Es kann ferner vorteilhaft sein, wenn die Ausleitflächen 151 der Ausleitsegmente 150 eine Beschichtung aufweisen, die einen möglichst geringen Reibungskoeffizienten aufweist. Bevorzugt ist dieser Reibungskoeffizient geringer als der Reibungskoeffizient der Transportstrecke. Besonders bevorzugt ist er deutlich geringer, beispielsweise nur ein Zehntel so groß wie der Reibungskoeffizient der Transportstrecke 120. So wird erreicht, dass durch den Kontakt der Behälterwand des Behälters 110 beispielsweise mit dem Ausleitsegment 103 an der Ausleitfläche nur ein geringes Drehmoment auf den Behälter wirkt, da die der Bewegungsrichtung entgegengesetzt wirkende Reibungskraft, die zusätzlich durch den Kontakt mit dem Ausleitsegment verursacht wird und von der Transportgeschwindigkeit der Behälter 110 abhängt, möglichst gering gehalten wird. Dies erlaubt den Einsatz der Ausleitvorrichtung auch bei sehr hohen Transportgeschwindigkeiten der Behälter bis zu beispielsweise drei oder vier Metern pro Sekunde. Bevorzugte Beschichtungen sind beispielsweise Telfon oder sehr glatte metallische Oberflächen.

Wie in Fig. 1 zu erkennen bewegt gerade das Ausleitsegment 104 den Behälter 110 nach rechts. Die Ausleitsegmente 102 und 103, die zuvor den Behälter 110 bewegt haben, können zurückgefahren werden (nach links), um Platz für den Behälter 111 zu schaffen, der hier nicht ausgeleitet werden soll.

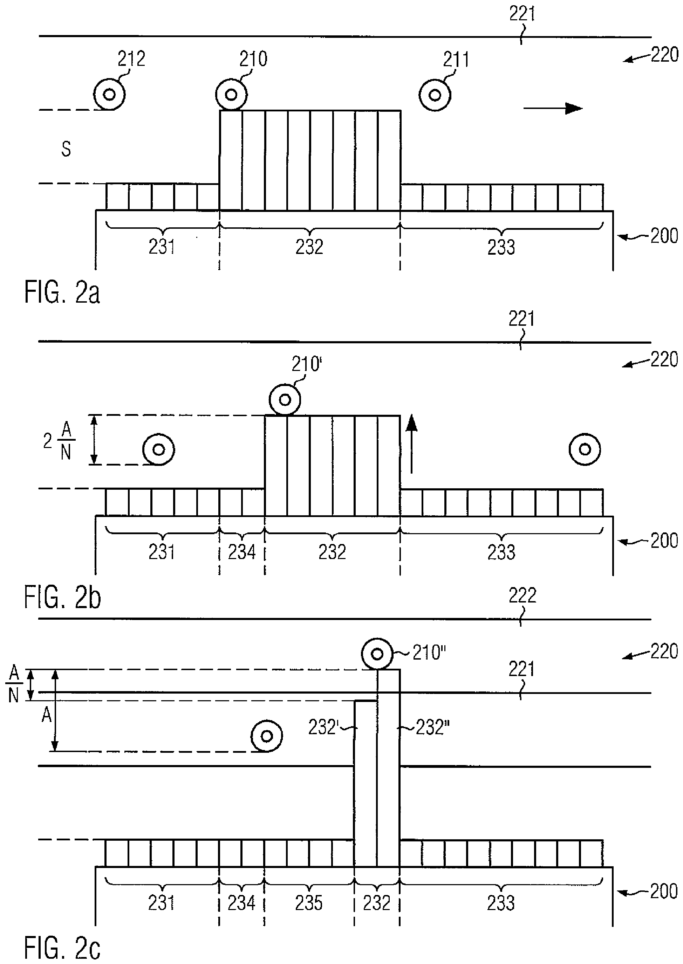

Fig. 2 zeigt schematisch einen Ausleitvorgang, bei dem ein Behälter 210 aus der ursprünglichen Transportstrecke 221 schließlich (wie in Fig. 2c dargestellt) auf eine weitere Transportstrecke 222 des Transporteurs 220 ausgeleitet werden soll.

In Fig. 2a sind drei aufeinanderfolgende Behälter dargestellt, die die Ausleitvorrichtung 200 passieren.

Dabei soll der Behälter 210 ausgeleitet werden, die Behälter 211 und 212 aber nicht. Um die Steuerung der Ausleitvorrichtung möglichst effektiv zu gestalten, kann vorgesehen sein, dass Sensoren vor Einlauf der Behälter in die Ausleitvorrichtung oder in den Bereich der Transportstrecke, neben dem die Ausleitvorrichtung vorgesehen ist, die genaue Position der Behälter registrieren und die Steuereinheit in Abhängigkeit der so empfangenen Signale auch die Position der Behälter zueinander bestimmt. So kann gewährleistet werden, dass nicht fälschlicherweise Ausleitsegmente ausgefahren sind, während ein nachfolgender Behälter bereits in die Ausleitvorrichtung einläuft und so unbeabsichtigt gegen ausgefahrene Ausleitsegmente laufen könnte.

Grundsätzlich ist bevorzugt, wenn zum Ausleiten möglichst viele Ausleitsegmente genutzt werden. Gemäß Fig. 2a werden zunächst alle Ausleitsegmente 232, die zwischen dem auszuleitenden Behälter 210 und den ihm vorlaufenden Behälter 211 angeordnet sind, um eine Strecke s ausgefahren. Diese Strecke s entspricht dabei vorzugsweise dem Abstand, den der auszuleitende Behälter 210 von der Ausleitvorrichtung bzw. dem Ende der in der Ausleitvorrichtung 200 vorgesehenen Ausleitsegmente besitzt. Es kann auch beabsichtigt sein, dass die Verfahrstrecke s geringfügig kleiner als der Abstand der Ausleitsegmente in eingefahrenem Zustand von dem auszuleitenden Behälter 210 ist, um ein Anstoßen beim Einlaufen des auszuleitenden Behälters 210 in den Bereich 232 mit ausgefahrenen Ausleitsegmenten zu verhindern. Die übrigen Ausleitsegmente der Ausleitvorrichtung 200, insbesondere die Ausleitsegmente 233, die sich in dem Bereich der Ausleitvorrichtung 200 befinden, der von dem vorlaufenden Behälter 211 passiert wird und die Ausleitsegmente 231, die sich in dem Bereich der Ausleitvorrichtung 200 befinden, der bereits von dem auszuleitenden Behälter passiert wurde, sind vorzugsweise nicht ausgefahren. Damit können Kollisionen vermieden werden.

Während sich der Behälter 210 entlang der Transportstrecke 221 weiterbewegt, werden die Ausleitsegmente 232 senkrecht zur Transportrichtung bewegt, wie der Pfeil in Fig. 2b schematisch darstellt. Dabei werden nur die Ausleitsegmente weiter in der angegebenen Pfeilrichtung bewegt, die sich in Transportrichtung des Behälters 210' vor diesem Behälter 210' befinden. Die Ausleitsegmente 234, die der Behälter 210', verglichen mit seiner Position in Fig. 2a bereits passiert hat werden, wie die übrigen Ausleitsegmente 233 und 231 wieder in die Ruheposition eingefahren, um Kollisionen mit nachfolgenden Behältern zu vermeiden. Die Ausleitsegmente 232 werden vorzugsweise so bewegt, dass ein sukzessives Ausleiten des Behälters 210' um einen Teil der gesamten Ausleitstrecke A durch jedes Ausleitsegment bewirkt wird. Dabei ist bevorzugt, wenn der Teil a der gesamten Ausleitstrecke A, um den jedes Ausleitsegment einen auszuleitenden Behälter 210', wie in Fig. 2b dargestellt, senkrecht zur Transportrichtung verschiebt, für jedes Ausleitsegment gleich ist, wobei dies nicht zwingend ist und grundsätzlich vom vorgesehenen Bewegungsprofil jedes einzelnen Ausleitsegments und dem zu erreichenden Bewegungsprofil des auszuleitenden Behälters während des Ausleitvorgangs abhängt. Dazu kann dieser Teil a der gesamten Ausleitstrecke A gegeben sein über a = A/N, wobei N die Gesamtanzahl der in der Ausleitvorrichtung vorgesehenen Ausleitsegmente ist. Dies ist jedoch nur sinnvoll, wenn für den Ausleitvorgang auch alle Ausleitsegmente der Ausleitvorrichtung verwendet werden. Ist dies nicht der Fall und wird für das Ausleiten eines Behälters nur ein bestimmter Teil der Ausleitsegmente der Ausleitvorrichtung verwendet, so entspricht N nicht der Gesamtzahl der Ausleitsegmente der Ausleitvorrichtung 200 sondern nur der Zahl der Ausleitsegmente, die für das Ausleiten des spezifischen Behälters 210' vorgesehen sind. Gemäß Fig. 2b hat der Behälter 210', verglichen mit Fig. 2a, die in Fig. 2b eingefahren dargestellten Ausleitsegmente 234 passiert. Verglichen mit der in Fig. 2a dargestellten Situation befindet sich der Behälter 210' daher senkrecht zur Transportrichtung des Behälters um die Strecke 2a bzw. 2A/N weiter entfernt von seinem Ursprungsort.

In Fig. 2c ist der Behälter 210' nun über weitere sukzessive Ausleitungen der Ausleitsegmente 235 in die entsprechende Position auf die zweite Förderstrecke 222 gebracht worden. Die noch für die Ausleitung verwendeten Ausleitsegmente 232 sind dabei unterschiedlich weit ausgefahren. Das in Transportrichtung vorletzte Ausleitsegment 232' ist dabei um den Teil a weniger weit ausgefahren als das Ausleitsegment 232", was immer noch mit dem Behälter 210" in Kontakt ist. Wie weiter oben beschrieben, hat das erste Ausleitsegment 232' den Behälter um eine Strecke a, verglichen mit dem vorherigen Ausleitsegment, verschoben. Das Ausleitsegment 232" wiederum hat den Behälter senkrecht zur Transportrichtung weiterhin um die Strecke a ausgeleitet, so dass sich die Entfernung des Behälters 210" senkrecht zur Mitte der ursprünglichen Transportrichtung vom Ausleitsegment 232' zum Ausleitsegment 232" um die Strecke a vergrößert hat.

Es sei erwähnt, dass dieser Ausleitvorgang nur beispielhaft dargestellt ist. Obwohl in diesem Ausführungsbeispiel jedes Ausleitsegment um die Strecke a weiter senkrecht zur Transportstrecke verfahren wird als das vorhergehende Ausleitsegment, kann auch beabsichtigt sein, dass mehrere Ausleitsegmente, beispielsweise zwei, zusammengeschaltet werden, um eine entsprechende Verschiebung um die Teilstrecke a zu bewirken. In diesem Fall sind mehr als zwei Ausleitsegmente notwendig, um den Behälter um die gesamte Ausleitstrecke A zu verschieben. Ebenso können die Teilstücke, um die die jeweilige Ausleitsegmente einen Behälter ausleiten, variieren. So können diese Teilstücke am Anfang und Ende des Ausleitvorgangs klein sein, beispielsweise nur 0,2-0,5cm betragen, wohingegen sie dazwischen größer sein können und beispielsweise 0,5-1cm betragen können. Um Zusammenstöße eines auszuleitenden Behälters mit Bereichen der Ausleitsegmente zu verhindern, die nicht der Ausleitfläche, wie in Fig. 1 beschrieben, entsprechen, ist vorgesehen, dass die einzelnen Ausleitsegmente erst verfahren werden, wenn sich der auszuleitende Behälter im Bereich der entsprechenden Ausleitfläche des Ausleitsegments befindet. So wird sichergestellt, dass die Krafteinwirkung in radialer Richtung, betrachtet aus dem Bezugssystem eines auszuleitenden Behälters, erfolgt, was dazu beiträgt, auftretende Kräfte in Richtung oder entgegengesetzt der Transportrichtung der Behälter zu reduzieren.

Die beschriebene anfängliche Auslenkung der Ausleitsegmente um die Strecke s, um sie möglichst nah an den auszuleitenden Behälter 210, wie in Fig. 2a dargestellt, heranzuführen, ist so nicht zwingend. Es kann auch vorgesehen sein, dass ein Ausleiten der Behälter bereits ohne vorherige Verschiebung um die Strecke s erfolgen kann bzw. diese Strecke gleich Null ist. Ausgehend von der anfänglichen Verschiebung um die Strecke s, unabhängig von deren Wert, können die Ausleitsegmente zum Ausführen des Ausleitvorgangs, wie oben beschrieben, um die Teilstücke a senkrecht zur Transportstrecke bewegt werden.

Damit ein Behälter um die Ausleitstrecke A ausgeleitet werden kann, ist es daher notwendig, dass jedes der N Ausleitsegmente um eine bestimmte Strecke verfahren werden kann. Eine notwendige Bedingung ist daher, dass das n-te Ausleitsegment um die Strecke $L = a+a(n-1)$ ausfahrbar ist. Für das erste Ausleitsegment (n=1) ergibt sich daher, dass dieses wenigstens um den Teil a=A/N der Ausleitstrecke verschoben werden können muss. Das letzte Ausleitsegment hingegen muss um die gesamte Ausleitstrecke A ausfahrbar sein. Auch wenn es zweckmäßig sein kann, die Ausleitsegmente bereits entsprechend vorzusehen und auch die Motoren so auszugestalten, dass die Ausleitsegmente um die entsprechenden Strecken ausfahrbar sind, kann es vorteilhaft sein, wenn jedes Ausleitsegment um die maximal vorgesehene Ausleitstrecke A ausfahrbar ist. Dies lässt sich auf effektive Weise verwirklichen, indem die in der Ausleitvorrichtung 200 vorgesehenen Ausleitsegmente alle baugleich sind. Das bedeutet, sie weisen alle die gleiche Länge auf und verfügen über gleiche Motoren.

Ist mehr als eine Ausleitstrecke 222 vorgesehen, beispielsweise eine Verteilung von Behältern auf vier oder fünf Transportstrecken durch die Ausleitvorrichtung 200, so muss vorteilhafterweise jedes Ausleitsegment um die gesamte mögliche Ausleitstrecke ausfahrbar sein, so dass jedes Ausleitsegment prinzipiell einen Behälter auch auf die am weitesten entfernte Transportstrecke ausleiten kann. Alternativ kann auch vorgesehen sein, dass die Trägheit eines durch die Ausleitsegmente ausgeleiteten Behälters gezielt ausgenutzt wird, um zu gewährleisten, dass er selbst nach Beendigung des Ausleitvorgangs sich um eine Strecke q senkrecht zur Transportrichtung weiterbewegt. In einem solchen Fall müssen die Ausleitsegmente nicht notwendig in der Lage sein, einen Behälter um die gesamte Ausleitstrecke auf eine weiter entfernt liegende Transportstrecke auszuleiten, sondern es kann genügen, wenn die Ausleitsegmente, abhängig von der für den Behälter vorgesehenen Transportstrecke (erste benachbarte, zweite benachbarte, etc.), einen bestimmten Impuls p auf den Behälter übertragen, ihn aber selbst nur um einen bestimmten Teil der gesamten Ausleitstrecke ausleiten. Der Impuls p kann dann so gewählt werden, dass er ausreicht, die entgegen der Bewegung senkrecht zur Transportstrecke wirkende Reibungskraft zu kompensieren und eine Bewegung des Behälters um das verbliebene Stück der gesamten Ausleitstrecke (gesamte Ausleitstrecke abzüglich des von den Ausleitsegmenten bewirkten Teils) zu bewirken. Da die Behälter selben Typs alle nahezu gleich schwer sind und die Bedingungen, unter denen sich die Behälter entlang der Transportstrecke bewegen, nahezu gleich für jeden Behälter des gleichen Typs sind, ist auch diese Ausführungsform der Ausleitung sehr genau, weist jedoch eine geringere Einsatzzeit der einzelnen Ausleitsegmente gegenüber einer Ausführungsform, in der der Behälter vollständig über die gesamte Ausleitstrecke von den Ausleitsegmenten bewegt wird, auf.

In Fig. 2 ist zu erkennen, dass es vorteilhaft ist, wenn die Ausleitflächen von zwei direkt nebeneinander angeordneten Ausleitsegmenten fluchten (die zwei Ausleitsegmente also gleichweit ausgelenkt oder ausgefahren sind), wenn sich der Behälter gerade aus dem Bereich des einen Ausleitsegments in den Bereich des benachbarten Ausleitsegments bewegt. Dadurch stellt sich für den Behälter die aus den beiden Ausleitflächen zusammengesetzte Ausleitfläche ohne Stufen oder Sprünge dar. Diese Fluchtung von zwei benachbarten Ausleitsegmenten muss vorzugsweise während der Bewegung der beiden Ausleitsegmente zum Ausleiten des Behälters beibehalten werden. Vorzugsweise ist die Fluchtung (insbesondere bei der Bewegung der Segmente zum Ausleiten) für alle Paare von direkt benachbarten Ausleitflächen, die an dem Ausleitvorgang teilnehmen, vorgesehen.

Sollte das Ausleitsegment 232" in Fig. 2c den Behälter nicht weit genug ausgeleitet haben, so können auch ein oder mehrere Ausleitsegmente der Gruppe 233 ausgefahren werden, sobald der Behälter 211 den Bereich vor den entsprechenden Ausleitsegmenten 233 verlassen hat. Dadurch kann sich ein mit dem Behälter mitlaufender Teil von ausgelenkten Ausleitsegmenten ergeben.

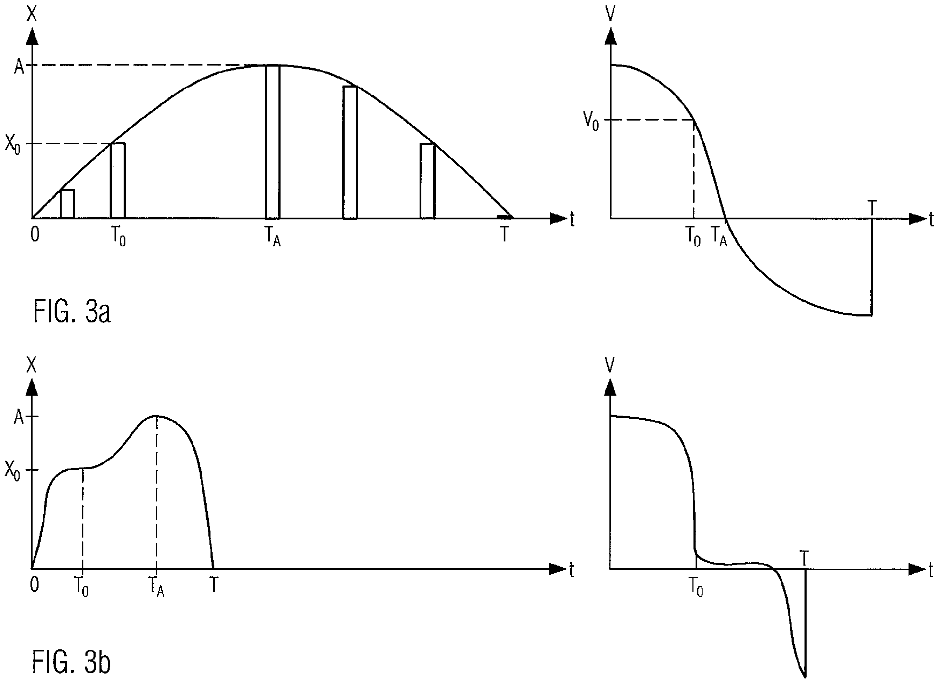

Fig. 3 zeigt zu den Ausleitvorgängen gemäß zweier Ausführungsformen gehörige Bewegungs- und Geschwindigkeitsprofile der Ausleitsegmente. Die in Fig. 3a und 3b dargestellten Bewegungs- und Geschwindigkeitsprofile sind auf das Ausleitsegment bezogen, das um die gesamte Ausleitstrecke A bewegt wird. Es versteht sich, dass für die übrigen Ausleitsegmente, die um nur einen Teil der gesamten Ausleitstrecke A verschoben werden, um einen bestimmten Behälter auszuleiten, die maximale Bewegungsamplitude, d.h. also die maximale Auslenkung oder das maximale Ausfahren des Ausleitsegments durch den Wert L, wie oben beschrieben, ersetzt werden muss.

In Fig. 3a ist eine Ausführungsform gezeigt, bei der das Ausleitsegment eine Bewegung senkrecht zur Transportrichtung entsprechend der Funktion $x = l \cdot \sin(ct)$ ausführt. Der Einfachheit halber wird davon ausgegangen, dass das Ausleitsegment aus seiner entsprechenden Ruheposition bei dem Wert 0 startet und den Maximalwert A erreicht, womit I=A ist. Ist eine anfängliche Verschiebung um die in Fig. 2a beschriebene Strecke s vorgesehen, kann das Bewegungsprofil natürlich entsprechend angepasst werden. Wie das Ausleitsegment jedoch von seiner eingefahrenen Position in die ausgefahrene Position um die Strecke s verschoben wird, ist prinzipiell beliebig, da hier kein Kraftübertrag auf einen Behälter erfolgt. In einem solchen Fall ist es bevorzugt, wenn die Bewegung des Ausleitsegments auf den Behälter zu mit hoher Geschwindigkeit erfolgt.

Gemäß Fig. 3a folgt die Bewegung des Ausleitsegments senkrecht zur Transportrichtung einer Sinusfunktion, sie steigt also zunächst steil an, flacht dann jedoch langsam ab, bis die Auslenkung zur Zeit $T_A$ ihren Maximalwert erreicht und der Behälter an die Zielposition ausgeleitet wurde. Die Übernahme des Behälters durch das Ausleitsegment findet zur Zeit $T_0$ bei der Auslenkung $x_0$ des Ausleitsegments statt. Um die dabei auf den Behälter einwirkende Kraft möglichst gering zu halten, ist der Punkt $x_0$ auf der hier dargestellten Kurve vom Zielpunkt der Auslenkung A nur geringfügig verschieden, so dass gemäß dem dargestellten Geschwindigkeitsprofil die Geschwindigkeit, mit der sich das Ausleitsegment auf den auszuleitenden Behälter zu bewegt, möglichst klein ist. Dies kann jedoch auch mit anderen Bewegungsprofilen erreicht werden, die einen prinzipiell beliebigen funktionalen Zusammenhang zwischen der Bewegung des Ausleitsegments und der Zeit herstellen. Es kann hier auch eine Vielzahl von Parametern (Geschwindigkeit, Beschleunigung, maximale Ausleitbewegung jedes einzelnen Ausleitsegments) genutzt werden, um ein solches Bewegungsprofil an bestimmte Anforderungen anzupassen. Nachdem der Behälter ausgeleitet wurde, kann das Ausleitsegment wieder in seine Ausgangsposition zurückfahren, indem es dem in Fig. 3a absteigenden Teil der Sinuskurve nach Passieren der Zeit $T_A$ folgt. Zur Zeit T befindet sich das Ausleitsegment dann wieder in eingefahrenem Zustand. Da die Zeit, während der ein auszuleitender Behälter überhaupt in Kontakt mit einem Ausleitsegment stehen kann, begrenzt ist, muss die Geschwindigkeit, mit der das Ausleitsegment sich bewegt so groß sein, dass während der Zeit, während der Kontakt mit dem auszuleitenden Behälter besteht, die Ausleitung des Behälters um die entsprechende Strecke $A - x_0$ erfolgen kann. Dazu kann die Steuereinheit freie Parameter, wie beispielsweise maximale Auslenkung des Ausleitsegments und Geschwindigkeitsprofil entsprechend anpassen. Bevorzugt ist, wenn die Parameter des Bewegungsprofils des Ausleitsegments oder der Ausleitsegmente in Abhängigkeit beispielsweise auch vom Gewicht der Behälter verändert werden können, um einwirkende Kräfte auf befüllte oder nicht befüllte Behälter einstellen zu können.

Fig. 3b zeigt eine weitere Ausführungsform eines Bewegungsprofils eines der Ausleitsegmente. Auch hier wird wieder davon ausgegangen, dass es sich hierbei um das Ausleitsegment handelt, das den Behälter um das letzte Stück $A$-$x_0$ verschiebt, so dass der Behälter die vollständige Ausleitstrecke A durchlaufen hat. In dieser Ausführungsform entspricht das Bewegungsprofil x(t) des Ausleitsegments senkrecht zur Transportstrecke keiner Sinusfunktion sondern einem prinzipiell beliebigen funktionalen Zusammenhang. In dieser Ausführungsform wird das Ausleitsegment bis zu seinem Berührungspunkt $x_0$ zur Zeit $T_0$ mit dem auszuleitenden Behälter sehr schnell senkrecht zur Transportrichtung bewegt (verglichen mit der Ausführungsform gemäß Fig. 3a). Da das Ausleitsegment in diesem Bereich seines Bewegungsprofils noch nicht im Kontakt mit dem auszuleitenden Behälter steht, entstehen hierdurch keine Nachteile, da kein Kraftübertrag auf den auszuleitenden Behälter stattfindet. Im Bereich um die Zeit $T_0$, in der der Kontakt zwischen dem auszuleitenden Behälter und dem Ausleitsegment mittels der Ausleitfläche an dem Ausleitsegment hergestellt wird, ist die Geschwindigkeit, wie in dem begleitenden Geschwindigkeitsprofil in Fig. 3b gezeigt, nahezu auf den Wert 0 gesunken bzw. ist der Bewegungsgeschwindigkeit des unmittelbar in Transportrichtung stromauf benachbarten Ausleitsegments angepasst oder identisch dazu. Von diesem Zeitpunkt $T_0$ an wird der Behälter durch das Ausleitsegment bis zur Zeit $T_A$ so weit verschoben, dass er die Differenz $A$-$x_0$ senkrecht zur Transportstrecke überwindet. Dabei kann die Geschwindigkeit des Ausleitsegments währenddessen im Wesentlichen konstant bleiben oder sogar ansteigen, geht jedoch gegen Null, sobald das Ausleitsegment mit dem auszuleitenden Behälter die Endposition erreicht. Es kann auch vorgesehen sein, dass die Geschwindigkeit in diesem Bereich des Ausleitvorgangs wieder ansteigt, um den Behälter möglichst schnell auszuleiten. Danach kann das Ausleitsegment mit vorzugsweise sehr hoher Geschwindigkeit wieder in seine Ausgangsposition zurückgebracht werden (um Platz für nachfolgende Behälter zu schaffen, die nicht ausgeleitet werden sollen oder aber um den nächsten Behälter bei der Position $x_0$ zu übernehmen, der ausgeleitet werden soll. Das Bewegungsprofil gemäß Fig. 3b bietet den Vorteil, dass die Ausleitsegmente aufgrund der hohen Geschwindigkeit beim Ausfahren in Richtung des ersten Berührungspunktes mit dem auszuleitenden Behälter $x_0$ und nach Ende des Ausleitvorgangs zurück in die Ausgangsposition nur eine kurze Zeit ausgefahren bleiben, was ein Ausleiten von auszuleitenden Behältern sowohl bei hohen Transportgeschwindigkeiten als auch bei verhältnismäßig geringem Abstand der Behälter in der Transportstrecke zueinander ermöglicht. Entsprechende Bewegungsprofile, wie sie in Fig. 3b dargestellt sind, können für die Ausleitsegmente daher bevorzugt sein, sofern die Steuerelektronik und die Motoren geeignet sind, eine entsprechende Bewegung zu ermöglichen.

Die in Fig. 3a und 3b dargestellten Bewegungsprofile lassen sich vorzugsweise über sukzessives Ausleiten mit Hilfe der einzelnen Ausleitsegmente erzielen. Es ist hier jedoch besonders bevorzugt, wenn nicht alle Ausleitsegmente den auszuleitenden Behälter um denselben Teil a der Ausleitstrecke ausleiten. Um eine möglichst hohe Flexibilität beim Ausleiten zu erreichen, kann vorgesehen sein, dass sich die einzelnen Teilstrecken, um die ein jeweiliges Ausleitsegment einen Behälter ausleitet, paarweise unterscheiden. Es kann auch vorgesehen sein, dass sich die Teilstrecken von nur einigen Ausleitsegmenten von den übrigen unterscheiden. In einer Ausführungsform ist vorgesehen, dass ein auszuleitender Behälter anfangs nur geringfügig durch ein oder mehrere Ausleitsegmente ausgeleitet wird. Beispielsweise können die in Transportrichtung führenden Ausleitsegmente (die ersten 2, die ersten 4 oder die ersten 10) den Behälter jeweils um eine Strecke k ausleiten. Die Strecke k muss nicht für alle Ausleitsegmente gleich sein, insbesondere kann sich von jedem Ausleitsegment zum nächsten geringfügig erhöht werden. Es kann beispielsweise vorgesehen sein, dass nur das letzte dieser führenden Ausleitsegmente den Behälter um die Teilstrecke a wie oben beschrieben ausleitet. Die übrigen um eine kleinere Teilstrecke. Die diesen führenden Ausleitsegmenten folgenden Ausleitsegmente können dann den auszuleitenden Behälter um Teilstrecken p ausleiten. Die Teilstrecken p können ebenfalls von Ausleitsegment zu Ausleitsegment in Transportrichtung größer werden. Weiterhin können die Teilstrecken p sämtlich größer als a sein. Es kann auch vorgesehen sein, dass eines oder einige der letzten Ausleitsegmente (das in Transportrichtung Letzte, die zwei Letzten oder die 5 Letzten) wiederum den Behälter nur um Teilstrecken q verschieben, die geringfügig kleiner als p sind, um die Geschwindigkeit, mit der sich der Behälter gegen Ende der Ausleitbewegung bewegt, zu reduzieren und hier ein Umkippen zu vermeiden.

Ist beabsichtigt, dass mit der Ausleitvorrichtung Behälter auch komplett von den Förderern ausgeleitet werden (beispielsweise in neben den Förderern angeordnete Behälter für Ausschuss), so kann ebenfalls vorgesehen sein, dass die Geschwindigkeit, mit der sich die Ausleitsegmente auf den Behälter zu bewegen, immer weiter zunimmt, sodass der Behälter auch nach Passieren des letzten Ausleitsegments einen hinreichend hohen Impuls senkrecht zur Transportstrecke aufweist, um (quer über einen Förderer hinaus) in einen vorgesehenen Behälter zu rutschen oder zu fliegen bzw. auf ein parallel zur Transportstrecke verlaufendes Förderband o. ä. verteilt zu werden.

Die hier dargestellten Bewegungsprofile sind nur zwei mögliche Beispiele für konkrete Ausführungsformen. Es sind ebenso andere, noch deutlich kompliziertere Bewegungsabläufe denkbar. Ebenso kann auch vorgesehen sein, dass ein Ausleitsegment mit einer konstanten Geschwindigkeit auf den auszuleitenden Behälter zu bewegt wird und mit derselben Geschwindigkeit bis zum Ende der Ausleitstrecke ausgeleitet wird. Das Ausleitsegment kann dann relativ unvermittelt, d.h. nahezu augenblicklich gestoppt werden und in die entgegengesetzte Richtung wieder zurück in die Ausleitvorrichtung bewegt werden.

Ebenso ist es möglich, Ausleitsegmente mit einer Doppelfunktion auszurüsten, beispielsweise neben dem Überschieben/Ausleiten auch eine Pusherfunktion nach DE 19516403 zu realisieren. So kann erreicht werden, dass ein Ausleitsegment ein relativ langsames aber dafür sehr genaues Ausleiten eines Behälters auf eine weitere Transportstrecke bewirken kann, gleichzeitig bzw. in einem anderen Arbeitsschritt aber auch Behälter aus der Transportstrecke beispielsweise in einen vorgesehenen Container schubsen kann. Da hierfür nur sichergestellt sein muss, dass der geschubste Behälter keinen anderen Behälter umstößt, kann dieses Schubsen oder Pushen mit deutlich höherer Geschwindigkeit erfolgen als ein normaler Ausleitvorgang. Indem steuerungstechnisch realisiert wird, dass die Bewegung der Ausleitsegmente entsprechend bestimmter Parameter gesteuert wird, lässt sich diese Regelung der Bewegung insbesondere bei Verwendung von Direktantrieben sehr leicht verwirklichen.

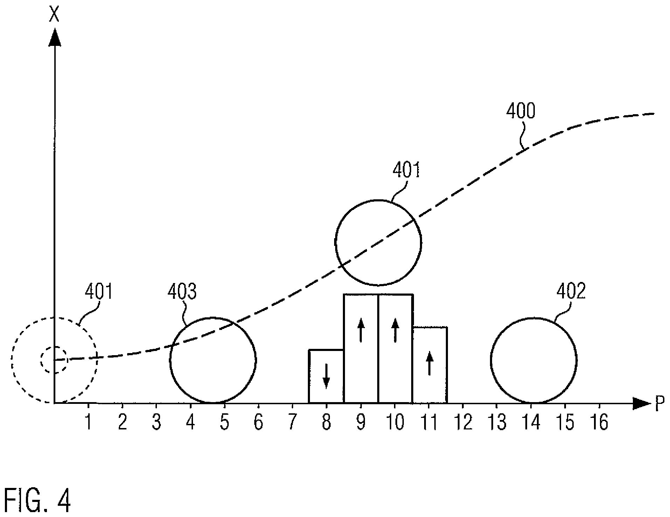

Fig. 4 zeigt eine mögliche Trajektorie 400 eines Behälters 401, der ausgeleitet werden soll. Die Transportrichtung ist nach rechts. Dem Behälter 401 läuft ein Behälter 402 voraus und läuft ein Behälter 403 nach, die beide nicht ausgeleitet werden sollen. Die Trajektorie beginnt bei der gestrichelt dargestellten Position 401'. Dort beginnend wurde der Behälter 401 nacheinander von den Ausleitsegmenten mit den Positionsnummern P von 1 bis 9 in Richtung x ausgelenkt. Das Ausleitsegment Nummer 8 wird gerade zurückgefahren, um Platz für den Behälter 403 zu schaffen. Die beiden Segmente Nummer 9 und 10 fluchten und werden synchron miteinander gleichschnell nach außen bewegt, um den Behälter 401 auszulenken und einen stufenlosen Übertritt des Behälters 401 von dem Ausleitsegment Nummer 9 zum Ausleitsegment Nummer 10 zu gewährleisten. Das Ausleitsegment 11 wird gerade ausgefahren, um demnächst mit den sich auswärtsbewegenden Ausleitsegment Nummer 10 zu fluchten. Durch das Zusammenspiel der Ausleitsegmente 1 bis 16 (oder auch von weniger Segmenten, oder, sofern vorgesehen, mehr Segmenten) wird eine krummlinige Trajektorie 400 (s-kurvenförmig) des Behälters 401 erreicht, obwohl die Ausleitflächen der Ausleitsegmente parallel zur Transportrichtung ausgerichtet sind. Die Ausleitsegmente Nummer 8 bis 11 sind in einer sich mit dem Behälter mitbewegenden Zone von ausgefahrenen Ausleitsegmenten. Die übrigen Ausleitsegmente (in Transportrichtung davor und/oder dahinter) sind eingefahren.

Die Ausleitsegmente bewirken eine mit zunehmender Nummer größer werdende Strecke des Ausleitvorgangs. D.h. das Ausleitsegment Nummer 2 bewirkt eine größere Bewegung in x-Richtung als das Ausleitsegment Nummer 1 und das Ausleitsegment Nummer 3 mehr als das Ausleitsegment Nummer 2 und so weiter. Evtl. ist die durch das oder die letzen Ausleitsegmente (z.B. Nummer 16 oder Nummer 15 und 16) bewirkte Bewegungsstrecke des Behälters geringer, als die Strecke, die der Behälter durch ein stromauf angeordnetes Ausleitsegment (z.B.) das Ausleitsegment Nummer 14 bewegt wird, um eine Verlangsamung des Behälters einzuleiten. Der Behälter kann sich nach Verlassen des letzten benutzten Ausleitsegments (z.B. Nummer 16) auch noch aufgrund seiner Trägheit alleine in x-Richtung weiterbewegen, dabei jedoch zunehmend langsamer. Die Weiterbewegung des auszuleitenden Behälters senkrecht zur Transportrichtung aufgrund seiner eigenen Trägheit kann auch als Indikator dafür dienen, wie viele Ausleitsegmente überhaupt bei einem bestimmten Behälter oder Behältertyp (groß, klein, befüllt, unbefüllt) zum Einsatz kommen müssen. Bewegt sich der Behälter aufgrund seiner Trägheit derart, dass er die durch die Ausleitsegmente im normalen Betrieb beschriebene Ausleitkurve bereits vor Erreichen des letzten Ausleitsegments oder der hinteren Ausleitsegmente verlässt, sich also senkrecht zur Transportrichtung bereits weiter bewegt hat, als es die Ausleitung durch die Ausleitsegmente zu diesem Zeitpunkt vorsieht, so kann vorgesehen sein, dass dieses oder diese Ausleitsegmente nicht zum Einsatz kommen. So kann Energie eingespart werden, da die Ausleitung des Behälters auch ohne diese Ausleitsegmente erfolgen kann. Es kann jedoch auch vorgesehen sein, dass die Wirkung der Trägheit des Behälters bei der Bestimmung des Bewegungsprofils jedes Ausleitsegments berücksichtigt wird, um sicherzustellen, dass ein auszuleitender Behälter über den gesamten Ausleitvorgang hinweg durch die Ausleitsegmente wenigstens abgestützt und so am Umkippen gehindert wird, selbst wenn bei den in Transportrichtung letzten Ausleitsegmenten auf einen zusätzlichen Kraftübertrag auf den auszuleitenden Behälter verzichtet wird. Diese übernehmen dann, im Gegensatz zu den vorhergehenden Ausleitsegmenten, keine aktiv ausleitende Funktion, sie schieben die Behälter also nicht senkrecht zur Transportrichtung über die Transportstrecke, sondern sie berühren den Behälter nur, oder bewegen sich mit ihm senkrecht zur Transportstrecke in einem Abstand von wenigen Millimetern, bevorzugt 2mm, besonders bevorzugt weniger als 1 mm, sodass er am Umkippen gehindert wird.

## Patentansprüche

1. Ausleitvorrichtung (100) zum Ausleiten von Behältern, wie Flaschen, aus einer Transportstrecke, wobei die Ausleitvorrichtung (100) einen ortsfesten, der Transportstrecke benachbart angeordneten Rahmen (101) umfasst, in dem wenigstens zwei, senkrecht zur Mittelachse der Transportstrecke bewegbar ausgebildete Ausleitsegmente (102-104) angeordnet sind, wobei die Ausleitsegmente (102-104) geeignet sind, einen Behälter aus der Transportstrecke auszuleiten, wobei die Ausleitsegmente eine Ausleitfläche (151) umfassen, die parallel zur Transportrichtung der Behälter in der Transportstrecke ist und die mit einem auszuleitenden Behälter in Kontakt treten kann; wobei die Ausleitvorrichtung N Ausleitsegmente umfasst und eine Steuereinheit vorgesehen ist, die die Ausleitsegmente in Transportrichtung eines auszuleitenden Behälters nacheinander um einen Teil der gesamten Ausleitstrecke A auslenken kann, sodass ein Behälter durch sukzessive Ausleitung ausgeleitet werden kann, **dadurch gekennzeichnet, dass** der Teil der Ausleitstrecke A gegeben ist über $a = \dfrac{A}{N}$ und wobei das n-te ($n \le$

$N$) Ausleitsegment um die Strecke $l = a + a(n-1)$ ausgefahren werden kann, oder jedes Ausleitsegment einen Behälter um eine Teilstrecke auslenken kann, die sich zumindest von der Teilstrecke eines anderen Ausleitsegments unterscheidet, wobei die Summe der Teilstrecken gleich der gesamten Ausleitstrecke A ist.

2. Ausleitvorrichtung nach Anspruch 1, **dadurch gekennzeichnet, dass** jedes Ausleitsegment (102-104) separat ansteuerbar ist.

3. Ausleitvorrichtung nach Anspruch 1 oder 2, **dadurch gekennzeichnet, dass** eine Ausleitstrecke eines Behälters senkrecht zur Transportstrecke durch Steuerung des Bewegungsprofils jedes Ausleitsegments eingestellt werden kann.

4. Ausleitvorrichtung nach einem der Ansprüche 1 bis 3, **dadurch gekennzeichnet, dass** die Ausleitvorrichtung wenigstens 5, 10, 15, 20, 25 oder 30 Ausleitsegmente umfasst.

5. Ausleitvorrichtung nach einem der Ansprüche 1 bis 4, **dadurch gekennzeichnet, dass** die Ausleitfläche (151) einen geringeren Reibungskoeffizienten aufweist als die Transportstrecke.

6. Ausleitvorrichtung (100) nach Anspruch 4, **dadurch gekennzeichnet, dass** eine erste Anzahl von Ausleitsegmenten in Transportrichtung vor einer zweiten Anzahl von Ausleitsegmenten angeordnet ist, wobei die erste Anzahl von Ausleitsegmenten einen Behälter jeweils um eine Strecke kleiner a ausleiten kann und die zweite Anzahl von Ausleitsegmenten einen Behälter jeweils um eine Strecke größer a ausleiten kann, wobei $l = \dfrac{A}{N}$ ist, mit A als Gesamtlänge der Ausleitstrecke und N Anzahl der Ausleitsegmente.

7. Verfahren zum Ausleiten von Behältern, wie Flaschen, aus einer Transportstrecke mittels wenigstens zweier, beweglicher, in einem ortsfesten Rahmen (101) angeordneter Ausleitsegmente (102-104), wobei die Ausleitsegmente senkrecht zur Transportstrecke bewegt werden, um einen Behälter senkrecht zur Transportstrecke auszuleiten, wobei die Ausleitsegmente (102-104) den auszuleitenden Behälter beim Ausleiten mit einer Ausleitfläche (151), die parallel zur Transportrichtung der Behälter in der Transportstrecke verläuft, berühren und den Behälter ausleiten; wobei N Ausleitsegmente durch eine Steuereinheit derart gesteuert werden, dass die Ausleitsegmente in Transportrichtung eines auszuleitenden Behälters nacheinander um einen Teil der gesamten Ausleitstrecke A ausgelenkt werden, **dadurch gekennzeichnet, dass** der Teil der Ausleitstrecke A gegeben ist durch $a = \dfrac{A}{N}$ und wobei das n-te Ausleitsegment in Transportrichtung um die Strecke $l = a + a(n-1)$ bewegt wird, wodurch ein Behälter sukzessive um Teile $\dfrac{A}{N}$ der Ausleitstrecke ausgeleitet wird, bis der Behälter um die gesamte Ausleitstrecke A ausgeleitet wurde, oder jedes Ausleitsegment leitet den Behälter um eine von wenigstens einem weiteren Ausleitsegment verschiedene Teilstrecke aus, wobei die Summe der Teilstrecken gleich der gesamten Ausleitstrecke A ist.

8. Verfahren nach Anspruch 7, **dadurch gekennzeichnet, dass** die Bewegung der Ausleitsegmente (102-104) separat gesteuert wird.

9. Verfahren nach Anspruch 7 oder 8, **dadurch gekennzeichnet, dass** eine Ausleitstrecke eines auszuleitenden Behälters senkrecht zur Transportstrecke durch Steuerung des Bewegungsprofils der Ausleitsegmente bestimmt wird.

10. Verfahren nach einem der Ansprüche 7 bis 9, **dadurch gekennzeichnet, dass** die Bewegung der Ausleitsegmente senkrecht zur Transportstrecke durch eine Funktion $x = l \cdot \sin(ct)$ oder eine beliebige andere Funktion $x_{a,b,\ldots}(t)$ beschrieben wird, wobei t die Zeit und a, b, c beliebige reelle Zahlen größer Null sind.

11. Verfahren nach einem der Ansprüche 7 bis 10, **dadurch gekennzeichnet, dass** die Geschwindigkeit, mit der das Ausleitsegment in Richtung des auszuleitenden Behälters bewegt wird und von diesem entfernt wird, größer ist als die Geschwindigkeit, mit der sich das Ausleitsegment bewegt während das Ausleitsegment mit der Ausleitfläche (151) in Kontakt mit dem auszuleitenden Behälter steht.

## Claims

1. Diverting device (100) for diverting containers, for example bottles, from a transport path, whereby the diverting device (100) comprises a stationary frame (101) that is disposed next to the transport path and in which at least two diverting segments (102), which are formed movably in a direction perpendicular to the central axis of the transport path, are disposed, wherein the diverting segments (102-104) are suitable to divert a container from the transport path, wherein the diverting segments comprise a diverting surface (151) that is parallel to the transport direction of the containers in the transport path and that can come in contact with a container to be diverted; wherein the diverting device comprises N diverting segments and that a control unit is provided that can deflect the diverting segments in the transport direction of a container to be deflected successively by a part of the overall diverting path A so that a container can be diverted through successive diverting, **characterized in that** the part of the diverting path A is provided through $a = \dfrac{A}{N}$ and wherein the n-th ($n \leq N$) diverting segment can be extended by the path $l = a + a(n\text{-}1)$ or wherein each diverting segment can deflect a container by a path section that differs at least from the path section of another diverting segment, wherein the sum of the path sections is equal to the overall diverting path A.

2. Diverting device according to claim 1, **characterized in that** each diverting segment (102-104) can be controlled separately.

3. Diverting device according to claim 1 or 2, **characterized in that** a diverting path of a container can be adjusted perpendicular to the transport path through control of the movement profile of each diverting segment.

4. Diverting device according to one of the claims 1 to 3, **characterized in that** the diverting device comprises at least 5, 10, 15, 20, 25 or 30 diverting segments.

5. Diverting device according to one of the claims 1 to 4, **characterized in that** the diverting surface (151) has a lower friction coefficient than the transport path.

6. Diverting device (100) according to claim 4, **characterized in that** a first number of diverting segments is disposed in the transport direction ahead of a second number of diverting segments, wherein the first number of diverting segments can each divert a container by a path smaller than a and wherein the second number of diverting segments can each divert a container by the path greater than a, whereby $a = \dfrac{A}{N}$, with A as the overall length of the diverting path and N the number of the diverting segments.

7. Method for diverting of containers, for example bottles, from a transport path by means of at least two flexible diverting segments (102-104) that are disposed in a stationary frame (101), wherein the diverting segments are moved perpendicularly to the transport path to divert a container perpendicularly to the transport path, wherein the diverting segments (102-104) contact the container to be diverted during diverting with a diverting surface (151), which is located in parallel to the transport direction of the containers in the transport path, and divert the container; wherein N diverting segments are controlled by a control unit in a way that the diverting segments are deflected successively in the transport direction of a container to be diverted by a part of the overall diverting path A, **characterized in that** the part of the diverting path A is given by $a = \dfrac{A}{N}$ and wherein the n-th diverting segment is moved in the transport direction by the path $l = a + a(n\text{-}1)$, wherein a container is diverted successively by parts of $a = \dfrac{A}{N}$ of the diverting path until the container will have been diverted by the overall diverting path A, or each diverting segment diverts the container for a path section that differs from at least one further diverting segment, wherein the sum of the path sections is equal to the overall diverting path A.

8. Method according to claim 7, **characterized in that** the movement of the diverting segments (102-104) is controlled separately.

9. Method according to claim 7 or 8, **characterized in that** a diverting path of a container to be diverted that is perpendicular to the transport path is determined through control of the movement profile of the diverting segments.

10. Method according to one of the claims 7 to 9, **characterized in that** the movement of the diverting segments perpendicular to the transport path is described by a function $x = l \cdot \sin(ct)$ or any other function $x_{a,b,\dots}(t)$, wherein t is the time and a, b, c are random real numbers greater than zero.

11. Method according to one of the claims 7 to 10, **characterized in that** the speed at which the diverting segment is moved in the direction of the container to be diverted and away from this container is higher than the speed at which the diverting segment moves while the diverting segment with the diverting surface (151) is in contact with the container to be diverted.

## Revendications

1. Dispositif d'extraction (100) destiné à extraire des contenants, tels que des bouteilles, d'un parcours de transport, le dispositif d'extraction (100) comprenant un cadre (101) en position fixe, agencé au voisinage du parcours de transport et dans lequel sont agencés au moins deux segments d'extraction (102-104) d'une configuration mobile perpendiculairement à l'axe médian du parcours de transport, les segments d'extraction (102-104) étant adaptés à extraire un contenant du parcours de transport et les segments d'extraction comprenant une surface d'extraction (151), qui est parallèle à la direction de transport des contenants dans le parcours de transport et peut entrer en contact avec un contenant devant être extrait, le dispositif d'extraction comprenant N segments d'extraction ainsi qu'une unité de commande, qui est en mesure de décaler les segments d'extraction, successivement en se référant à la direction de transport d'un contenant à extraire, d'une fraction de la totalité de la course de déplacement d'extraction A, de sorte qu'un contenant peut être extrait par extraction successive, **caractérisé en ce que** la fraction de la course de déplacement d'extraction A est donnée par $a = \frac{A}{N}$ et **en ce que** le nième (n ≤ N) segment d'extraction peut être sorti de la course de déplacement l = a+a(n-1), ou bien chaque segment d'extraction peut décaler un contenant d'une course de déplacement partielle, qui se distingue au moins de la course de déplacement partielle d'un autre élément d'extraction, la somme des courses de déplacement partielles étant égale à la course de déplacement d'extraction totale A.

2. Dispositif d'extraction selon la revendication 1, **caractérisé en ce que** chaque segment d'extraction (102-104) peut être commandé séparément.

3. Dispositif d'extraction selon la revendication 1 ou la revendication 2, **caractérisé en ce qu'**une course de déplacement d'extraction d'un contenant, perpendiculairement au parcours de transport, peut être réglée par la commande du profil de mouvement de déplacement de chaque segment d'extraction.

4. Dispositif d'extraction selon l'une des revendications 1 à 3, **caractérisé en ce que** le dispositif d'extraction comprend au moins 5, 10, 15, 20, 25 ou 30 segments d'extraction.

5. Dispositif d'extraction selon l'une des revendications 1 à 4, **caractérisé en ce que** la surface d'extraction (151) présente un coefficient de frottement plus faible que la surface de transport.

6. Dispositif d'extraction (100) selon la revendication 4, **caractérisé en ce qu'**un premier nombre de segments d'extraction est agencé, en se référant à la direction de transport, avant un deuxième nombre de segments d'extraction, le premier nombre de segments d'extraction étant en mesure de décaler un contenant respectivement d'une course de déplacement plus petite que a, et le deuxième nombre de segments d'extraction étant en mesure de décaler un contenant respectivement d'une course de déplacement plus grande que a, avec $a = \frac{A}{N}$ et A étant la longueur totale de la course de déplacement d'extraction et N le nombre des segments d'extraction.

7. Procédé pour extraire des contenants, tels que des bouteilles, d'un parcours de transport, à l'aide d'au moins deux segments d'extraction (102-104) agencés dans un cadre (101) en position fixe, les segments d'extraction étant déplacés perpendiculairement au parcours de transport, procédé d'après lequel les segments d'extraction (102-104), lors de l'extraction, touchent le contenant avec une surface d'extraction (151), qui s'étend parallèlement à la direction de transport des contenants dans le parcours de transport, et assurent son extraction, et d'après lequel N segments d'extraction sont commandés par une unité de commande de manière telle, que les segments d'extraction soient décalés, successivement dans la direction de transport d'un contenant à extraire, d'une fraction de la totalité de la course de déplacement d'extraction A, **caractérisé en ce que** la fraction de la course de déplacement d'extraction A est donnée par $a = \frac{A}{N}$ et **en ce que** le nième (n ≤ N) segment d'extraction, en se référant à la direction de transport, est déplacé de la course de déplacement l = a+a(n-1), ce qui conduit un contenant à être extrait successivement de fractions $a = \frac{A}{N}$ de la course de déplacement d'extraction, jusqu'à ce que le contenant ait été extrait de la course de déplacement d'extraction totale A, ou bien chaque segment d'extraction décale un contenant d'une course de déplacement partielle, qui se distingue au moins de la course de déplacement partielle d'un autre élément d'extraction, la somme des courses de déplacement partielles étant égale à la course de déplacement d'extraction totale A.

8. Procédé selon la revendication 7, **caractérisé en ce**

**que** le mouvement de déplacement des segments d'extraction (102-104) est commandé séparément.

9. Procédé selon la revendication 7 ou la revendication 8, **caractérisé en ce qu'**une course de déplacement d'extraction d'un contenant à extraire, perpendiculairement au parcours de transport, est déterminée par la commande du profil de mouvement de déplacement des segments d'extraction.

10. Procédé selon l'une des revendications 7 à 9, **caractérisé en ce que** le mouvement de déplacement des segments d'extraction perpendiculairement au parcours de transport, est décrit par une fonction $x = l \cdot \sin(ct)$ ou une autre fonction quelconque $x_{a,b,\dots}(t)$, t étant le temps et a, b, c des nombres réels quelconques supérieurs à zéro.

11. Procédé selon l'une des revendications 7 à 10, **caractérisé en ce que** la vitesse avec laquelle le segment d'extraction est déplacé en direction du contenant à extraire et est éloigné de celui-ci, est supérieure à la vitesse avec laquelle se déplace le segment d'extraction lorsque le segment d'extraction est en contact, par sa surface d'extraction (151), avec le contenant à extraire.

FIG. 1

221

212        210        211        220

S

231        232        233        200

FIG. 2a

221

220

$2\frac{A}{N}$

210'

231  234    232        233        200

FIG. 2b

222

210"

221

$\frac{A}{N}$

$A$

232'      232"

231  234  235  232      233        200

FIG. 2c

FIG. 3a

FIG. 3b

EP 3 057 891 B1

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1012087 B1
- DE 102010025744 A1
- WO 030227717 A1
- DE 19516403